# EUROPEAN PATENT SPECIFICATION

(11) **EP 0 555 026 B1**
(45) Date of publication and mention of the grant of the patent: **01.12.1999**
(21) Application number: 93300681.9
(22) Date of filing: 29.01.1993
(51) Int. Cl.: G01K 17/00

(54) **Heat flow transducer**
Wärmeflusswandler
Transducteur de flux thermique

(30) Priority: 29.01.1992 GB 9201937
(43) Date of publication of application: 11.08.1993
(73) Proprietor: P.A. HILTON LIMITED, Hampshire SO20 6PX (GB)
(72) Inventor: Heikal, Morgan, Brighton BN2 7FP (GB)
(74) Representative: Perkins, Sarah

(56) References cited:
- FR-A- 1 333 800
- SU-A- 783 664
- US-A- 4 050 302
- US-A- 4 197 738
- US-A- 4 198 859
- US-A- 4 553 852
- PATENT ABSTRACTS OF JAPAN VOL. 10 NO 209, (E-421) 22 JULY 1986 & JP-A-61 050 384 (SHOWA DENKO K.K.) 12 MARCH 1986
- PATENT ABSTRACTS OF JAPAN VOL. 6, NO. 168 (P-139) 2 SEPTEMBER 1982 & JP-A-57 086 729 (SHOWA DENKO K.K.) 29 MAY 1982

## Description

The invention relates to a transducer for the measurement of the rate of heat flow. Heat flux is proportional to the temperature difference across a thermal resistance which carries the heat. Conventionally, heat flux is determined by measuring such a temperature difference by means of differential thermocouples or thermopiles fixed to the surfaces of a known thermal barrier. Transducers of this kind, if they are to be accurate, require careful design for each specific application and care in the disposition, interconnection and bonding of the temperature sensors to the surfaces of the thermal barriers. Satisfactory transducers are expensive because their design is inflexible and it is difficult to reproduce specific characteristics.

In US 4197738 a thermal fluxmeter is described in which an array of thermocouples, which are serially connected, are provided in an electrically insulating material for sensing a temperature difference across the thermocouples. Each of the thermocouples consists of two different metals in different areas which form a thermoelectric juncture at their point of contact. A plurality of individual metal plates, separated by channels of the electrically insulating material, are provided on the upper and lower surfaces of the fluxmeter to provide the necessary serial connections to the individual thermocouples.

The present invention seeks to provide an improvement.

According to the invention there is provided a method of making a heat flow transducer comprising providing a core with opposing faces and at least one aperture therethrough; in each of the at least one apertures locating a respective thermoelectric cooler whereby the at least one thermoelectric cooler constitutes a first set of heat flow paths defining a first set of thermal resistances between the opposed faces of the core; and providing electrical interconnections to the at least one thermoelectric cooler for deriving an electrical response to a thermal flux through the transducer characterised by providing first and second heat conductive plates on the opposed faces of the core and in thermal contact therewith; and in that said core comprises heat resistive material the thermal conductivity of which is selected in dependence on the desired sensitivity of the transducer thereby providing a second heat flow path defining a second thermal resistance, parallel to the first set of heat flow paths, through said core.

A thermoelectric cooler (TEC) is a semiconductor device consisting of a matrix of semiconductor thermoelectric couples connected electrically in series and thermally in parallel. The cooler consists of a plurality of thermoelectric elements connected in series which are surrounded by thermally insulating material in the form of ceramic sheets and an epoxy potting material. Application of electric current through the cooler cools one side with respect to the other and this allows forced extraction of heat from a component thermally in contact with the cold side to be dissipated from the hot side. Such devices are used in the temperature control of sensitive electronic devices, for example. Thermoelectric coolers are capable of being manufactured with consistent accuracy and their use in the manner according to the present invention provides a relatively inexpensive, accurate and sensitive heat flow transducer capable of flexible design.

Thermoelectric coolers have an electrical polarity which corresponds with a given thermal polarity. If current is passed through the device in a given direction the heat flow will be in a particular direction. Reversing the current reverses the heat flow. Similarly, it is found that in the passive use of the device as a sensor in accordance with the invention, if heat flows in a particular direction then electrical current is generated in a particular direction. Reversal of the direction of heat flow reverses the current. There may be only a single thermoelectric cooler in the transducer. Preferably, however, there is a plurality. It is envisaged that usually the thermoelectric coolers will be arranged in the core thermally in parallel in the same thermal sense. This is not necessary, however, since whichever the thermal sense of the TECs their terminals can be interconnected to give an additive serial electrical response.

Heat flow has been measured hitherto by means of thermopile type heat flux transducers. These are thin film devices which are fragile and relatively insensitive. Typically such transducers give an output in the range 0.006 to 3.5 uV/(W/m²). By comparison transducers made in accordance with the present invention are rugged and can have a sensitivity of the order of 64uV/(W/m²). However, high sensitivity may be accompanied by problems of accuracy and reproducibility. It is found in practice that errors may indeed appear if precautions are not taken. One such precaution is to ensure that the collective thermoelectric cooler area is a small fraction of the total transducer area. Preferably the ratio of total transducer area to the collective thermoelectric cooler area is greater than 15:1. A more preferred figure is greater than 20:1.

It is possible to mount the thermoelectric coolers in cut-outs in the core. However, it is preferred that the heat resistive material is a settable or curable fluid which is moulded around the or each thermoelectric cooler and allowed to solidify. For example, the heat resistive material may be silicone rubber or epoxy resin.

In order to ensure the absence of bubbles in the core it is preferred to carry out the moulding process under vacuum and in accordance with another aspect of the invention there is provided a method of making a heat flow transducer as described above including the steps of mounting the or each thermoelectric cooler with the said electrical interconnections in a mould, injecting or pouring the fluid heat resistive material in to the mould and allowing the heat resistive material to set or cure in a vacuum chamber.

The invention has application in the measurement of thermal conductivity of samples of material as used in the building industry, for example. Thus, another aspect of the invention provides such a measurement unit which includes a heat flow transducer as described above and comprising a heat insulated chamber, a mount within the chamber for mounting a specimen to be measured; heating means for supplying heat to one surface of the specimen; and cooling means for withdrawing heat from the opposite surface of the specimen, the said heat flow transducer being mounted in thermal contact with one of said surfaces of the specimen. There may be a loading plate for applying a determined compressional load to the specimen being measured.

The invention will further be described with reference to the accompanying drawings, of which:
Figure 1 is a plan view of a heat flow transducer in accordance with the invention;
Figure 2 is a cross-sectional view taken at II-II of Figure 1;
Figure 3 is a perspective view of a thermoelectric cooler of the transducer of Figures 1 and 2; and
Figure 4 is a schematic cross-sectional diagram of a unit incorporating the invention for the measurement of the thermal conductivity of samples.

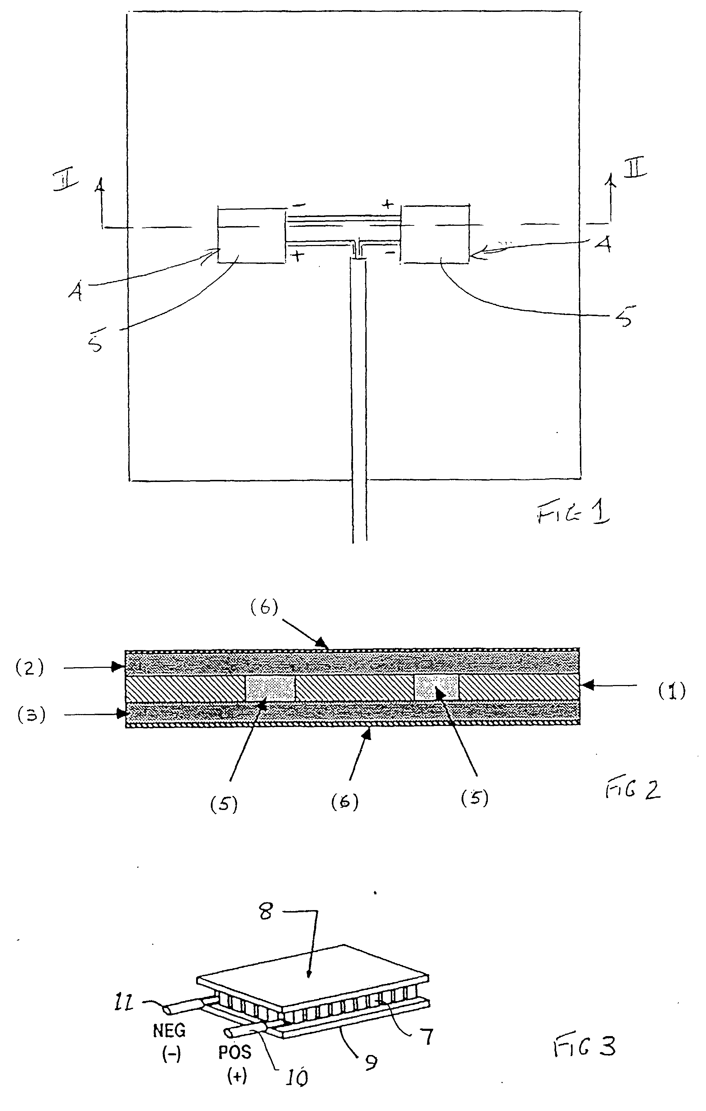

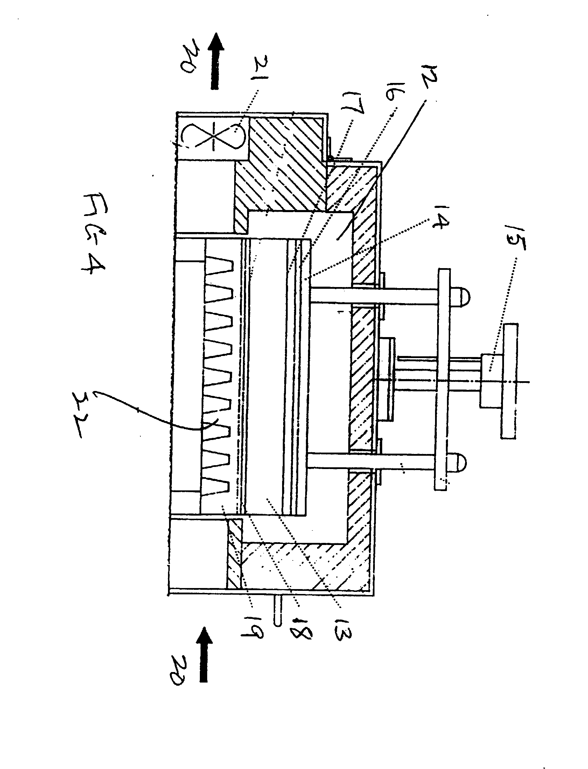

Referring to Figures 1 and 2 the transducer is, in this embodiment, a square unit comprising a silicone rubber core 1 which constitutes a thermal barrier between a top aluminium plate 2 and a bottom aluminium plate 3 which contact respective flat surfaces of the core and sandwich it. At spaced positions 4 are provided respective thermoelectric coolers (TEC's) 5. The outside surfaces of the plates 2 and 3 are faced with silicone rubber 6. They are 6cm square in this embodiment.

In manufacture of the transducer the TECs 5 are electrically interconnected and supported in a mould which defines the shape of the core. Liquid silicone rubber is poured into the mould and allowed to set under vacuum, the mould being placed in a vacuum chamber. This ensures the expulsion of any bubbles.

The sensitivity of the transducer can be adjusted by varying the composition of the core material. Typically, the thermal conductivity of the silicone alone is approximately 0.27W/mK. This can be reduced considerably by mixing it with a bulking agent of powder or plastic beads with low conductivity. Increasing the ratio of this bulking agent to silicone will make the transducer more sensitive.

Figure 3 shows a thermoelectric cooler which comprises an array 7 of semiconductor thermoelectric couples connected electrically in series and thermally in parallel between two ceramic plates 8, 9. The cooler has a positive terminal 10 and a negative terminal 11. When current is passed in the appropriate direction plate 8 is cooled with respect to plate 9. However, reversal of the current flow reverses the heat flow.

The thermoelectric coolers used in this example were 1cm square TECs made by Marlow Industries under the designation MI 1060T.

The coolers 5 of the embodiment of Figures 1 and 2 are situated in the core 1 with their thermal polarities aligned (plates 8 uppermost, for example) and their terminals are connected electrically in series. It is found that heat applied to the transducer to flow from one plate to the other causes an electrical current to be generated by the thermoelectric coolers at a level according to the rate of heat flow. Additive connection of the TEC's in series enhances the sensitivity of the device.

Appropriate selection of the properties and dimensions of the core and metal plates and the disposition of the TEC's allows the heat flow to be shared predictably by the TEC's and their collective output is an accurate and consistent representation of the heat flow. In the embodiment shown the total transducer area is 36 sq cm and the collective TEC area is 2 sq cm. The ratio is therefore 18:1.

Figure 4 shows a unit for measuring the thermal conductivity of a sample of material. The unit has a heat-insulated chamber 12 within which is supported a block 13 of the material to be tested. A loading plate 14 is operated by a hand-screw 15 to apply a determined compressional load to the block. An electric heater 16 heats a hot-plate 17 which applies heat to the block. Beneath the block is mounted a heat flow transducer 18 of the kind described with reference to Figures 1 to 3 and of the same length and width as the block. Beneath the transducer is a cold plate heat-sink 19 from which heat is withdrawn by means of an air-flow 20 induced by a fan 21. Fins 22 depend from the heat-sink in to the air-flow.

Thermocouples are provided to measure the temperature at the upper and lower faces of the block 13. Thermocouple and heat flow transducer signals are passed to a four-channel temperature controller/indicator situated on a main panel (not shown) of the unit. The unit is supplied in use with a calibration equation determined by tests performed with samples of known thermal conductivity. These reference samples have had their thermal conductivity found by a direct method to British Standards. The calibration equation enables the user to easily calculate the thermal conductivity of the material under test.

In addition, an RS232 serial socket enables these signals to be passed to a computer, via the lead supplied. Software provided with the unit allows automatic determination of the thermal conductivity of the sample over a range of mean temperatures. Both graphical and numeric hard copy can be obtained if a suitable printer is available.

## Claims

1. A method of making a heat flow transducer comprising providing a core with opposing faces and at least one aperture therethrough; in each of the at least one apertures locating a respective thermoelectric cooler whereby the at least one thermoelectric cooler constitutes a first set of heat flow paths defining a first set of thermal resistances between the opposed faces of the core; and providing electrical interconnections to the at least one thermoelectric cooler for deriving an electrical response to a thermal flux through the transducer characterised by providing first and second heat conductive plates on the opposed faces of the core and in thermal contact therewith; and in that said core comprises heat resistive material the thermal conductivity of which is selected in dependence on the desired sensitivity of the transducer thereby providing a second heat flow path defining a second thermal resistance, parallel to the first set of heat flow paths, through said core.

2. A method as claimed in claim 1 characterised in that a plurality of apertures are provided in the core each with a respective thermoelectric cooler, the thermoelectric coolers being connected serially by means of the electrical interconnections whereby the electrical outputs of the thermoelectric coolers is summed.

3. A method as claimed in either of claims 1 or 2 characterised in that at least one portion of the core material is cut-out to provide the at least one aperture.

4. A method as claimed in either of claims 1 or 2 characterised in that the at least one thermoelectric cooler is mounted with the electrical interconnections in a mould and the core with the at least one aperture is formed by injecting or pouring the heat resistive material in a fluid state into the mould around the at least one thermoelectric cooler and allowing the heat resistive material to set or cure in a vacuum chamber.

5. A method as claimed in any one of claims 1 to 4 characterised in that the heat resistive material comprises silicon rubber.

6. A method as claimed in any one of claims 1 to 4 characterised in that the heat resistive material comprises an epoxy resin.

7. A heat flow transducer for use in the measurement of thermal conductivity of a specimen of material, the transducer comprising a core (1) having opposed faces; at least one thermoelectric cooler (5) set into a respective aperture in the core so as to constitute a first set of heat flow paths defining a first set of thermal resistances between the opposed faces of the core; and electrical interconnections to the at least one thermoelectric cooler (5) to derive an electrical response to a thermal flux through the transducer characterised in that there is further provided first and second heat conductive plates (2,3) in thermal contact with the opposed faces of the core; in that the core (1) comprises a heat resistive material having a thermal conductivity selected in dependence on the desired sensitivity of the transducer; and in that a second heat flow path defining a second thermal resistance is provided parallel to the first set of heat flow paths through the core.

8. A heat flow transducer as claimed in claim 7 characterised in that the ratio of the total area presented by the transducer to the thermal flux to the collective area presented by the at least one thermoelectric cooler to the thermal flux is greater than 15:1.

9. A heat flow transducer as claimed in claim 8 characterised in that the ratio is greater than 20:1.

10. Apparatus for the measurement of thermal conductivity of a specimen of material comprising a heat insulated chamber (12); a mount within the chamber for mounting the specimen; heating means for supplying heat to one surface of the specimen; cooling means (19) for withdrawing heat form the opposite surface of the specimen; and a heat flow transducer as claimed in any one of claims 7 to 9; the heat flow transducer being mounted in thermal contact with one of the surfaces of the specimen.

## Patentansprüche

1. Verfahren zur Herstellung eines Wärmefluß-Meßaufnehmers, bei dem man einen Kern mit einander entgegengesetzten Seiten und mindestens einer Öffnung dadurch hindurch schafft, in jeder der mindestens einen Öffnungen einen jeweiligen thermoelektrischen Kühler unterbringt, wodurch der mindestens eine thermoelektrische Kühler eine erste Gruppe von Wärmeflußwegen bildet, die eine erste Gruppe von Wärmewiderständen zwischen den einander entgegengesetzten Seiten des Kerns definieren, und elektrische Verbindungen mit dem mindestens einen thermoelektrischen Kühler schafft, um eine elektrische Antwort auf einen Wärmefluß durch den Meßaufnehmer zu gewinnen, dadurch gekennzeichnet, daß man erste und zweite wärmeleitende Platten auf den einander entgegengesetzten Seiten des Kerns und in thermischem Kontakt damit vorsieht und daß der Kern wärmebeständiges Material aufweist, dessen Wärmeleitfähigkeit in Abhängigkeit von der gewünschten Empfindlichkeit des Meßaufnehmers gewählt wird, wodurch ein zweiter Wärmeflußweg geschaffen wird, der einen zweiten, zu der ersten Gruppe von Wärmeflußwegen parallelen Wärmewiderstand durch den Kern definiert.

2. Verfahren nach Anspruch 1, dadurch gekennzeichnet, daß man eine Vielzahl von Öffnungen in dem Kern schafft, die jeweils mit einem thermoelektrischen Kühler versehen sind, wobei die thermoelektrischen Kühler mittels der elektrischen Verbindungen in Reihe verbunden sind, wodurch die elektrischen Ausgangsgrößen der thermoelektrischen Kühler summiert werden.

3. Verfahren nach einem der Ansprüche 1 oder 2, dadurch gekennzeichnet, daß mindestens ein Teil des Kernmaterials ausgeschnitten wird, um die mindestens eine Öffnung zu schaffen.

4. Verfahren nach einem der Ansprüche 1 oder 2, dadurch gekennzeichnet, daß der mindestens eine thermoelektrische Kühler mit den elektrischen Verbindungen in einer Form montiert wird und der Kern mit der mindestens einen Öffnung gebildet wird, indem das wärmebeständige Material in einem flüssigen Zustand um den mindestens einen thermoelektrischen Kühler herum in die Form gespritzt oder gegossen wird und das wärmebeständige Material in einer Vakuumkammer formfestigen oder aushärten gelassen wird.

5. Verfahren nach einem der Ansprüche 1 bis 4, dadurch gekennzeichnet, daß das wärmebeständige Material Silikongummi aufweist.

6. Verfahren nach einem der Ansprüche 1 bis 4, dadurch gekennzeichnet, daß das wärmebeständige Material ein Epoxydharz aufweist.

7. Wärmefluß-Meßaufnehmer zur Verwendung bei der Messung der Wärmeleitfähigkeit von Materialproben, wobei der Meßaufnehmer einen Kern (1) mit einander entgegengesetzten Seiten, mindestens einen thermoelektrischen Kühler (5), der in eine jeweilige Öffnung im Kern gelegt ist, um eine erste Gruppe von Wärmeflußwegen zu bilden, die eine erste Gruppe von Wärmewiderständen zwischen den einander entgegengesetzten Seiten des Kerns definieren, und elektrische Verbindungen mit dem mindestens einen thermoelektrischen Kühler (5) aufweist, um eine elektrische Antwort auf einen Wärmefluß durch den Meßaufnehmer zu gewinnen, dadurch gekennzeichnet, daß weiterhin erste und zweite wärmeleitende Platten (2, 3) in thermischem Kontakt mit den einander entgegengesetzten Seiten des Kerns vorgesehen sind, daß der Kern (1) ein wärmebeständiges Material aufweist, der eine in Abhängigkeit von der gewünschten Empfindlichkeit des Meßaufnehmers gewählte Wärmeleitfähigkeit hat, und daß ein zweiter Wärmeflußweg, der einen zweiten Wärmewiderstand definiert, parallel zu der ersten Gruppe von Wärmeflußwegen durch den Kern vorgesehen ist.

8. Wärmefluß-Meßaufnehmer nach Anspruch 7, dadurch gekennzeichnet, daß das Verhältnis der Gesamtfläche, die der Meßaufnehmer dem Wärmefluß darbietet, zu der zusammengefaßten Fläche, die der mindestens eine thermoelektrische Kühler dem Wärmefluß darbietet, größer als 15:1 ist.

9. Wärmefluß-Meßaufnehmer nach Anspruch 8, dadurch gekennzeichnet, daß das Verhältnis größer als 20:1 ist.

10. Vorrichtung zur Messung der Wärmeleitfähigkeit einer Materialprobe, mit einer wärmeisolierten Kammer (12), einer Befestigung innerhalb der Kammer, um die Probe zu befestigen, einer Heizeinrichtung, um einer Oberfläche der Probe Wärme zuzuführen, einer Kühleinrichtung (19), um von der entgegengesetzten Oberfläche der Probe Wärme abzuziehen, und einem Wärmefluß-Meßaufnehmer nach einem der Ansprüche 7 bis 9, wobei der Wärmefluß-Meßaufnehmer in thermischem Kontakt mit einer der Oberflächen der Probe befestigt ist.

## Revendications

1. Procédé de fabrication d'un transducteur de flux thermique comprenant le fait de pourvoir un noyau avec des faces opposées et au moins une ouverture le traversant, en disposant, dans chacune desdites au moins une ouvertures un refroidisseur thermoélectrique respectif, ledit au moins un refroidisseur thermoélectrique constituant ainsi un premier ensemble de trajets de flux thermique définissant un premier ensemble de résistances thermiques entre les faces opposées du noyau ; et de pourvoir des interconnexions électriques avec ledit au moins un refroidisseur thermoélectrique pour obtenir une réponse électrique à un flux thermique passant par le transducteur, caractérisé par le fait de pourvoir des première et seconde plaques thermoconductrices sur les faces opposées du noyau et en contact thermique avec celui-ci ; et en ce que ledit noyau comprend une matière résistant à la chaleur dont on choisit la conductivité thermique en fonction de la sensibilité souhaitée du transducteur, en obtenant ainsi un second trajet de flux thermique définissant une seconde résistance thermique, parallèle au premier ensemble de trajets de flux thermique, dans ledit noyau.

2. Procédé selon la revendication 1, caractérisé en ce qu'une pluralité d'ouvertures sont ménagées dans le noyau, chacune étant munie d'un refroidisseur thermoélectrique respectif, les refroidisseurs thermoélectriques étant connectés en série au moyen des interconnexions électriques, les sorties électriques des refroidisseurs thermoélectriques étant ainsi sommées.

3. Procédé selon l'une quelconque des revendications 1 ou 2, caractérisé en ce qu'au moins une partie de la matière de noyau est découpée pour fournir ladite au moins une ouverture.

4. Procédé selon l'une quelconque des revendications 1 ou 2, caractérisé en ce que ledit au moins un refroidisseur thermoélectrique est monté avec les interconnexions électriques dans un moule, et en ce que le noyau pourvu de ladite au moins une ouverture est formé par injection ou par coulage de la matière résistant à la chaleur dans un état fluide dans le moule autour dudit au moins un refroidisseur thermoélectrique, et en permettant de durcir ou de cuire la matière résistant à la chaleur dans une chambre à vide.

5. Procédé selon l'une quelconque des revendications 1 à 4, caractérisé en ce que la matière résistant à la chaleur est constituée de caoutchouc silicone.

6. Procédé selon l'une quelconque des revendications 1 à 4, caractérisé en ce que la matière résistant à la chaleur est constituée d'une résine époxy.

7. Transducteur de flux thermique pour utilisation dans la mesure de conductivité thermique d'un spécimen de matière, le transducteur comprenant un noyau (1) comportant des faces opposées ; au moins un refroidisseur thermoélectrique (5) placé dans une ouverture respective dans le noyau de façon à constituer un premier ensemble de trajets de flux thermique définissant un premier ensemble de résistances thermiques entre les faces opposées du noyau ; et des interconnexions électriques avec ledit au moins un refroidisseur thermoélectrique (5) pour obtenir une réponse électrique à un flux thermique passant par le transducteur, caractérisé en ce que l'on prévoit en outre des première et seconde plaques thermoconductrices (2, 3) en contact thermique avec les faces opposées du noyau ; en ce que le noyau (1) est constitué d'une matière résistant à la chaleur ayant une conductivité thermique choisie en fonction de la sensibilité souhaitée du transducteur ; et en ce qu'un second trajet de flux thermique définissant une seconde résistance thermique est disposé parallèlement au premier ensemble de trajets de flux thermique dans le noyau.

8. Transducteur de flux thermique selon la revendication 7, caractérisé en ce que le rapport de la superficie totale présentée par le transducteur au flux thermique à la superficie collective présentée par ledit au moins un refroidisseur thermoélectrique au flux thermique est supérieur à 15 : 1.

9. Transducteur de flux thermique selon la revendication 8, caractérisé en ce que le rapport est supérieur à 20 : 1.

10. Appareil destiné à la mesure de conductivité thermique d'un spécimen de matière comprenant une chambre (12) thermiquement isolée ; un support à l'intérieur de la chambre pour supporter le spécimen ; un moyen de chauffage destiné à appliquer de la chaleur à une surface du spécimen ; un moyen (19) de refroidissement pour éliminer la chaleur de la surface opposée du spécimen ; et un transducteur de flux thermique selon l'une quelconque des revendications 7 à 9 ; le transducteur de flux thermique étant monté en contact thermique avec l'une des surfaces du spécimen.
